# EUROPEAN PATENT SPECIFICATION

(11) **EP 3 182 163 B1**
(45) Date of publication and mention of the grant of the patent: **03.07.2019**
(21) Application number: 15382649.0
(22) Date of filing: 18.12.2015
(51) Int. Cl.: G01S 19/36, G01S 19/33, G01S 19/32, G01S 19/21

(54) **RECONFIGURABLE GNSS RF FRONT END AND METHOD FOR RECONFIGURING A GNSS RF FRONT END**
REKONFIGURIERBARES GNSS-HF-FRONTEND UND VERFAHREN ZUR REKONFIGURATION EINES GNSS-HF-FRONTEND
ÉTAGE FRONTAL RF GNSS RECONFIGURABLE ET PROCÉDÉ DE RECONFIGURATION ASSOCIÉ

(43) Date of publication of application: 21.06.2017
(73) Proprietor: GMV AEROSPACE AND DEFENCE, S.A.U., 28760 Tres Cantos, Madrid (ES)
(72) Inventor: PEÑA GONZÁLEZ, Orlando, 20009 San Sebastián - Guipúzcoa (ES)
(74) Representative: Balder IP Law, S.L.

(56) References cited:
- EP-A2- 1 152 254
- CN-A- 101 198 160
- US-A1- 2007 105 495
- US-A1- 2008 081 568
- US-A1- 2009 322 596

## Description

### TECHNICAL FIELD

The present invention relates to radio frequency (RF) front ends with a plurality of RF chains particularly suitable for receivers for global navigation satellite systems (GNSS).

### STATE OF THE ART

Several decades have passed since the Global Positioning System (GPS) was initially launched. Since then, new global navigation satellite constellations and signals have appeared as the technology has been improved.

Receivers for global navigation satellite systems have been upgraded accordingly so as to support most of these new constellations and GNSS bands, which in some cases has made the receivers interoperable between different GNSS constellations, for instance, with the so-called multi-constellation.

By using more satellites and/or signals, the receivers may provide a more accurate and reliable position when the global navigation satellite systems are being used for navigation purposes. As a larger number of satellites may provide a better coverage, the system also becomes more robust, that is, the amount of time in which there are not enough satellites in sight decreases significantly.

To this end, recent efforts have been put in developing flexible or reconfigurable RF front end and GNSS processor architectures that enable the system to cope with new gradually deployed GNSS constellations and/or frequencies.

A flexible GNSS receiver RF front end that may be adjusted for receiving signals from different GNSS is disclosed in international publication number WO 2011/113540 A2. A band-pass filter that receives signals captured by an antenna may adjust its passband so that only a particular spectrum passes to the following stages of the front end. By modifying the passband, most frequencies are rejected except for the spectrum containing the GNSS signal of interest, so a same front end may support bands with different carrier frequencies.

U.S. patent application publication No. 2015/0198718 A1 discloses a GNSS receiver including a receiver chain that is capable of operating two GNSS signals by sharing the hardware used by said signals. The electrical signal resulting from the wave captured by an antenna is split in two branches. Each branch filters the received electrical signal so as to keep one GNSS signal: one branch keeps the L1 signal, and the other branch keeps the L2 signal. These branches are amplified separately and then combined in a single branch. Depending on a control signal that sets whether L1 or L2 is to be retrieved, one amplifier is enabled and the other one disabled. The single branch is then connected to a frequency mixer, which depending on the GNSS signal that is present in the electrical signal, that is, L1 or L2, a sinusoidal signal with the corresponding frequency is mixed to down-convert the signal in frequency. Since the L1 and L2 signals are intermittent (wherein the intermittence depends on the control signal), the front end further demultiplexes the L1 and L2 signals so that they may be processed by a GNSS processor.

U.S. patent application publication No. 2009/0322596 A1 discloses a GNSS receiver comprising a plurality of RF chains that is adapted to receive a first GNSS signal if operating in a first mode and a second GNSS signal if operating in a second mode.

These front ends, however, are not capable of changing the configurations of a set of RF chains, i.e. change an arrangement of RF chains from an original configuration to other different configurations, providing another degree of flexibility that the GNSS processor may take advantage of.

### DESCRIPTION OF THE INVENTION

The RF front end for global navigation satellite systems disclosed in the present invention intends to solve the shortcomings of RF front ends of the prior art.

A first aspect of the invention relates to an RF front end for global navigation satellite systems comprising: a plurality M of RF chains, M being a natural number greater than one, each RF chain at least comprising: an antenna, a low-noise amplifier, and a frequency mixer; and a plurality N of local oscillators, N being a natural number greater than one. The RF front end further comprises reconfiguration means configured to connect each of the M frequency mixers to any of the N local oscillators, and to change at least one established connection between a frequency mixer and a local oscillator into a connection between the frequency mixer and a different local oscillator.

The RF front end is connectable to a GNSS processor which processes signals outputted by each of the RF chains. When the GNSS receiver features multi-constellation and/or multi-band capabilities, the receiver may advantageously use signals from different GNSS or frequencies. Accordingly, the antenna of each of the M RF chains may capture electromagnetic waves from several GNSS such as, for example, GPS, GLONASS, Galileo, etc. In some cases, the RF chains may output signals with different frequencies corresponding to a particular GNSS, or with different frequencies corresponding to several GNSS.

In this sense, the reconfiguration means may change established connections of the frequency mixers of the RF chains from one local oscillator to another local oscillator from the plurality of N local oscillators. For example, in some embodiments, each local oscillator from the plurality of N local oscillators may be tuned to a different frequency. In such case, the electrical signal extracted from the output port of a frequency mixer may include one or another GNSS signal at a frequency that is not filtered out by a filter in a signal conditioning stage installed between the frequency mixer and the output of the RF chain.

Thus, for example, when the frequency mixer of an RF chain is connected to a first local oscillator tuned to a first frequency, the output of the RF chain may be the GPS L2 signal, and when the reconfiguration means change the connection of said frequency mixer to a second local oscillator tuned to a second frequency, the output of the RF chain may be the GPS L5 signal, requiring little or no adjustment of the filter in the signal conditioning stage. The output signal may be further processed, for instance by means of an amplifier, an analog-to-digital converter, or directly inputted to a GNSS processor.

Further, the reconfiguration means may change established connections such that the frequency mixers of two different RF chains share a same local oscillator. As two RF chains may output electrical signals corresponding to a same GNSS signal, wherein the electrical signals have been down-converted in frequency by a same local oscillator, the GNSS processor may use both signals for GNSS reflectometry, for example. If the RF front end comprises other RF chains in addition to the two RF chains sharing said same local oscillator, the reconfiguration means may connect the frequency mixer corresponding to the additional RF chains to another local oscillators; said RF chains may be used, for instance, for satellite navigation, reflectometry, or any other application that the GNSS processor may be configured to support.

The use of a same local oscillator in two or more RF chains is important for some applications such as reflectometry or interference detection and location since the same phase noise in the signal outputted by the oscillator is present. In these applications, it is not enough that the GNSS electrical signals of different chains are mixed with sinusoidal signals with the same frequency, for example having two separate local oscillators tuned to a same frequency.

When there are as many local oscillators as frequency mixers in the RF front end, that is to say, in the particular case in which N = M, the reconfiguration means may establish connections between the frequency mixers and the local oscillators so that no oscillator is connected to more than one frequency mixer. If each local oscillator is tuned to a different frequency, each RF chain may, for example, output a different GNSS signal.

In some embodiments of the invention, N is not greater than M, that is, the plurality of local oscillators comprises fewer local oscillators than RF chains, or the same number of local oscillators than RF chains.

In some embodiments of the invention, the reconfiguration means are further configured to either connect any of the N local oscillators to a voltage source, or disconnect any of the N local oscillators from a voltage source.

Any local oscillator of the RF front end that is not connected to a frequency mixer may be disconnected from its voltage source, and thus not drain any power from the system, which in some cases may be supplied by a battery. In this sense, the reconfiguration means may disengage the connection between the local oscillator and the voltage source or power supply, for example by means of voltage regulators that may be switched on and off so as to connect and disconnect the local oscillator from the voltage source. In some embodiments, a same voltage source may supply power to more than one local oscillator. In some of these embodiments, a same voltage source feeds voltage to each of the N local oscillators.

When a local oscillator which is not powered is to be used, the reconfiguration means may also establish a connection between a voltage source and said local oscillator.

In a particular embodiment of the invention, the plurality of RF chains comprises four RF chains (M is 4). In a particular embodiment of the invention, the plurality of local oscillators comprises four local oscillators (N is 4).

In some embodiments of the invention, the reconfiguration means comprise a plurality of zero ohm resistors, and a plurality of voltage regulators. The RF front end adjusts the connections between frequency mixers and local oscillators with 0Ω resistors: when the resistors are in place soldered, an electrical circuit is completed and a frequency mixer may receive the signal generated by an oscillator. Accordingly, the reconfiguration means may change the established connections by desoldering and soldering the resistors.

The reconfiguration means further change connections between local oscillators and a voltage source or respective voltage sources by means of voltage regulators. The voltage regulators not only stabilize the voltage powering the oscillators, they also let the current arrive to the oscillators when they are turned on; when they are turned off, an open circuit is provided and no current is fed to the oscillators.

In some embodiments of the invention, the reconfiguration means comprise one of: a plurality of RF relays, and a plurality of RF switches. These components provide the reconfiguration means with dynamic and/or automated connection change capabilities.

In some embodiments of the invention, the reconfiguration means are further configured to, being the frequency mixer of a first RF chain connected to a first local oscillator, change an established connection between the frequency mixer of a second RF chain and a second local oscillator into a connection between the frequency mixer of the second RF chain and the first local oscillator.

In some embodiments of the invention, the reconfiguration means are further configured to connect the frequency mixers of third and fourth RF chains to a local oscillator different from the first local oscillator so as to share said local oscillator different from the first local oscillator.

A GNSS processor connected to an RF front end comprising four RF chains, four local oscillators and reconfiguration means may operate in several modes -potentially enabling different applications- with configurations such as, for example: the four RF chains having the frequency mixer connected to different local oscillators -in the case of local oscillators tuned to different frequencies, the output signals may be from a same GNSS constellation or from different GNSS constellations-; two RF chains having the frequency mixer connected to a same local oscillator, and the other two RF chains having the frequency mixer connected to another different local oscillators; two RF chains having the frequency mixer connected to a first local oscillator, and the other two RF chains having the frequency mixer connected to a second local oscillator; and three RF chains having the frequency mixer connected to a first local oscillator, and the other RF chain having the frequency mixer connected to a second local oscillator.

In some embodiments of the invention, the reconfiguration means are further configured to, being the frequency mixer of a first RF chain connected to a first local oscillator, change the established connection between the frequency mixer of all other RF chains and any local oscillator different from the first local oscillator into respective connections between the frequency mixer of those other RF chains and the first local oscillator.

A GNSS processor may take advantage of a configuration in which each of the M frequency mixers uses a same local oscillator for the detection and location of interferences, for example.

Moreover, the reconfiguration means may change the established connections and switch from this or another configuration to a different combination of connections between the frequency mixers and the local oscillators. Accordingly, in some embodiments of the invention, the reconfiguration means are further configured to, being the frequency mixer of a first RF chain and the frequency mixer of a second RF chain connected to a same local oscillator, change the connection between the frequency mixer of one of those two RF chains and said same local oscillator into a connection between the frequency mixer of that RF chain and a local oscillator different from said same local oscillator.

Another aspect of the invention relates to a method for reconfiguring an RF front end for global navigation satellite systems, wherein the RF front end comprises a plurality N of local oscillators and a plurality M of RF chains each having an antenna, a low-noise amplifier, and a frequency mixer, wherein each of said M frequency mixers is connected to any of said N local oscillators. The method comprises changing an established connection between the frequency mixer of a first RF chain and a first local oscillator into a connection between the frequency mixer of the first RF chain and a second local oscillator.

Since a frequency mixer that was connected to a local oscillator may connect to a different local oscillator, the operation of the RF front end is adjusted in that the frequency mixer of an RF chain may mix the electrical signal -resulting from the wave captured by the antenna- with different sinusoidal signals. In other words, depending on which local oscillator is connected to the frequency mixer, the signal from one or another local oscillator is inputted to the mixer. Different local oscillators may be tuned to different frequencies, or they may be tuned on-the-go if the local oscillators are variable, thus the frequency mixer down-converts the electrical signal depending on the frequency of the oscillator. Accordingly, different GNSS bands -having different carrier frequencies- may be retrieved at the output of the RF chain.

In some embodiments, a user or personnel involved in operating the RF front end may desolder 0Ω (zero ohm) resistors that connect a frequency mixer of a first RF chain to a first local oscillator, and solder them in other locations (for instance, another soldering pads or traces of a printed circuit board) that may establish a different connection, particularly a connection originating from the same frequency mixer (i.e. the frequency mixer of the first RF chain) to a second local oscillator. In some embodiments, the user or personnel changes the position of jumpers or the receptacles that microcoaxial cables are connected to in order to change an established connection between the frequency mixer of the first RF chain and a first local oscillator to an established connection between said frequency mixer and a second local oscillator. In some embodiments, the user or personnel controls signals (e.g. select signals) that adjust the circuits of RF relays or RF switches making the frequency mixer of the first RF chain to change its established connection from a first local oscillator to a second local oscillator.

In some embodiments of the invention, the method comprises changing an established connection between the frequency mixer of a second RF chain and a local oscillator different from the second local oscillator into a connection between the frequency mixer of the second RF chain and the second local oscillator.

A configuration in which the frequency mixers of the first and second RF chains are connected to the second local oscillator makes that the electrical signal of each RF chain to mix with the signal originated at the same local oscillator, thus the same frequency and phase is present in both mixers. This makes the RF front end potentially suitable for applications in which a GNSS processor requires GNSS signals captured by different antennas to be down-converted by a same sinusoidal signal; as a result, a sine wave with the same frequency, same phase noise and same frequency drifts is present in the frequency mixer of both RF chains. This may be particularly advantageous, for example, for a GNSS processor -connectable to the RF front end- which is configured to process GNSS signals for reflectometry.

Further, in some of these embodiments, the method comprises changing an established connection between the frequency mixer of a fourth RF chain and a local oscillator different from the third local oscillator into a connection between the frequency mixer of the fourth RF chain and the third local oscillator.

In this case, the RF front end may arrive to a configuration in which the frequency mixer of two RF chains (first and second RF chains) are connected to a same local oscillator (second local oscillator), and the frequency mixer of another two RF chains (third and fourth RF chains) are connected to another same local oscillator (third local oscillator). In some of these embodiments, the second local oscillator is tuned to a first frequency, and the third local oscillator is tuned to a second frequency. Said embodiments may be particularly advantageous, for example, for a GNSS processor which is configured to process GNSS signals for reflectometry corresponding to two GNSS bands featuring different frequencies.

In some embodiments of the invention, the method comprises having the frequency mixer of two respective RF chains connected to a same local oscillator, changing one of those established connections into a connection between the frequency mixer of one of those RF chains into a connection between that frequency mixer and another local oscillator different from said same local oscillator. In this way, the RF front end may vary its operation so that two different frequency mixers stop sharing a local oscillator.

In some embodiments of the invention, the method comprises changing established connections between the frequency mixer of all RF chains and a local oscillator different from the second local oscillator into respective connections between the frequency mixer of those RF chains and the second local oscillator. An RF front end reconfigured in this way may be suitable, for example, for a GNSS processor that processes GNSS signals so as to detect and locate interferences, namely GNSS interfering signals.

Changing the established connection between the frequency mixer of any of the M RF chains (including the second, third and fourth RF chains described in some embodiments of the invention) and any of the N local oscillators may be performed in any of the manners described above in relation to changing the established connection between the frequency mixer of the first RF chain and a local oscillator.

In some embodiments of the invention, the method comprises disconnecting any of the N local oscillators from a voltage source powering the local oscillator or oscillators. In some embodiments of the invention, the method comprises connecting any of the N local oscillators to a voltage source.

A user or personnel in charge of the RF front end may disconnect an oscillator from a voltage source so that some power is saved when a local oscillator is not connected to the frequency mixer of any of the M RF chains, for example. Conversely, the user or personnel may connect a local oscillator to a voltage source so that it is powered again. These tasks may be accomplished, for instance, disabling/enabling (or switching off/on) a voltage regulator connected between the voltage source and the local oscillator.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1A to 1C are RF front ends in accordance with embodiments of the present invention.
Figure 2 is an RF front end in accordance with another embodiment of the present invention.
Figures 3A to 3D show the RF front end of Figure 2 with different established connections of the reconfiguration means.

### DESCRIPTION OF A WAY OF CARRYING OUT THE INVENTION

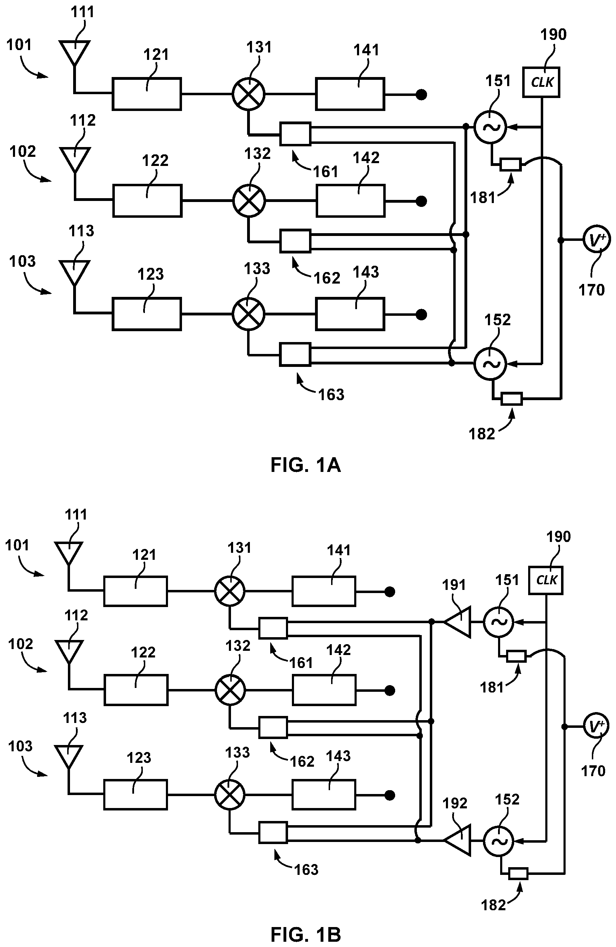

A representation of an RF front end in accordance with an embodiment of the present invention is shown in Figure 1A in a block diagram form. The front end comprises a plurality of RF chains including three RF chains 101-103 (M=3), and a plurality of local oscillators 151-152 (N=2).

Each RF chain comprises an antenna 111-113, a first signal conditioning stage 121-123, a frequency mixer 131-133, and a second signal conditioning stage 141-143.

Each of the first signal conditioning stages 121-123 may comprise a filter such as a band-pass filter or a low-pass filter, and/or an amplifier (e.g. a low-noise amplifier). The first conditioning stage may filter out undesired frequency components of electrical signals corresponding to the electromagnetic waves captured by the antennas, and/or amplify the electrical signals.

The second signal conditioning stages 141-143 may comprise an amplifier and/or a filter such as a low-pass filter or a band-pass filter (e.g. intermediate frequency anti-aliasing filter), and/or an analog-to-digital converter (ADC). Such stages may further filter out the part of the spectrum that is not of interest after the electrical signal has been mixed with the sinusoidal signal (generated by the local oscillator) in the frequency mixer. The electrical signal may also be amplified after it has been filtered. And prior to the output of the RF chain, the electric signal may be digitized by means of an analog-to-digital converter.

The RF front end is connectable to a GNSS processor which processes signals received in each of the RF chains. As such, a GNSS processor may include inputs for each RF chain so as to process the respective electrical signals. Said processor is out of the scope of the present invention.

Each of the N local oscillators 151, 152 is connected to a clock 190 providing a reference signal to the local oscillators; the clock 190 may be, for example, an oscillator including a vibrating crystal. The local oscillators may be powered by voltage source 170. The two local oscillators 151, 152 are interconnected with each frequency mixer 131-133, in such a way that reconfiguration is possible, as will be explained next.

The RF front end further comprises reconfiguration means 161-163, 181-182 that may adjust connections 161-163 so that a frequency mixer connects to one local oscillator or another. For example, connections 161-163 may be switched such that the frequency mixers 131, 132 share the local oscillator 151, and the frequency mixer 133 uses the local oscillator 152, in which case the RF chains 101, 102 sharing a local oscillator 151 may be used for reflectometry and the RF chain 103 using a different oscillator 152 may be used for navigation purposes, for example; or connections 161-163 may be switched such that all the frequency mixers 131-133 and, therefore, all the RF chains 101-103 share the local oscillator 152 like, for instance, in applications such as GNSS interference detection and location.

The reconfiguration means may further adjust connections 181, 182 so as to connect/disconnect voltage power supplies to/from local oscillators 151, 152. When the local oscillators are used by one or more frequency mixers, the reconfiguration means connect the local oscillators 151, 152 to the voltage source by adjusting connections 181, 182, whereas when one local oscillator is not being used, for instance when the three RF chains 101-103 share a same local oscillator, the reconfiguration means may disconnect the unused local oscillator from the voltage source by acting on connection 181 or 182.

In some embodiments of the invention, the reconfiguration means comprise 0Ω (zero ohm) resistors that adjust the connections 161-163; the resistors are soldered so as to electrically connect a frequency mixer to a local oscillator. In this sense, a reconfigurable GNSS RF front end may include a plurality of traces, tracks and/or soldering pads on a printed circuit board such that a user may reconfigure the connections between frequency mixers and local oscillators closing with zero ohm resistors the otherwise open circuits. An established connection of the reconfiguration means may be changed by desoldering the corresponding zero ohm resistor/s and soldering resistor/s in the positions that provide the connection sought.

In some embodiments of the invention, the reconfiguration means comprise RF relays or RF switches preferably featuring high isolation and low insertion losses which may adjust the connections 161-163. The reconfiguration means may control signals (i.e. select signals) that modify the configuration of said relays (the contacts of an RF relay either are in open-circuit or in short-circuit) or switches (a connection is made between a first contact and one of the several contacts that complete one or another circuit). An operator may vary, remotely, the control signals, or even have them adjusted dynamically using, for instance, a microcontroller.

In some embodiments of the invention, the reconfiguration means comprise voltage regulators that adjust the connections 181, 182; the voltage regulators may enable or disable the flow of current between the voltage source 170 and a local oscillator. Thus, when a local oscillator is not used by any of the frequency mixers 131-133, a user may switch off the voltage regulator associated to said local oscillator and save power. The voltage regulator may be switched on again when the reconfiguration means connect a frequency mixer to the local oscillator. In addition, when the voltage regulator is switched on, the voltage supplied to the local oscillator remains advantageously steady, thus the regulators protect the oscillators from overcurrent that may damage their circuitry.

Figure 1B is an RF front end in accordance with another embodiment of the present invention similar to the RF front end of Figure 1A. In this embodiment, amplifiers 191, 192 are respectively connected to the local oscillators 151, 152 at their outputs such that the amplitude of the sinusoidal signals inputted to the frequency mixers 131-133 is adjusted.

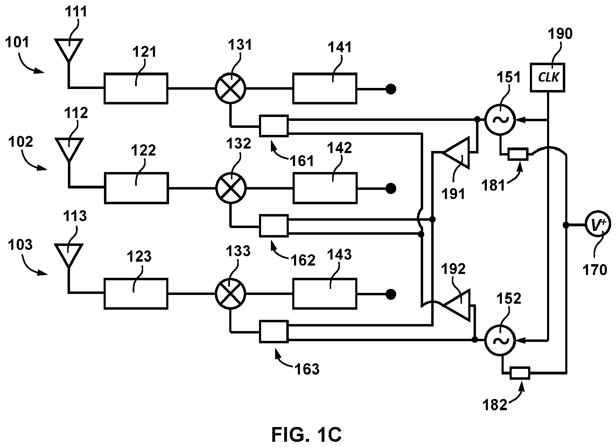

Figure 1C is an RF front end in accordance with another embodiment of the invention similar to the RF front ends of Figures 1A and 1B. The output of the local oscillator 151 is split in two branches or signal paths: a first branch or signal path is routed towards one of the frequency mixers 131, whereas the second branch or signal path is routed towards the remaining frequency mixers 132, 133. Similarly, the output of the oscillator 152 is split in two branches: a first one routed towards frequency mixer 133, and the second one router towards frequency mixers 131, 132.

The amplifiers 191, 192 are respectively connected to the local oscillators 151, 152 at the second branches. Accordingly, depending on the connections established by the reconfiguration means 161-163, it may be convenient to adjust the amplifiers 191, 192 such that the oscillating signals are provided to each frequency mixer 131-133 with a substantially similar amplitude; thus, if for instance several frequency mixers are connected to a same local oscillator, the gain of the amplifier connected to said oscillator may be increased.

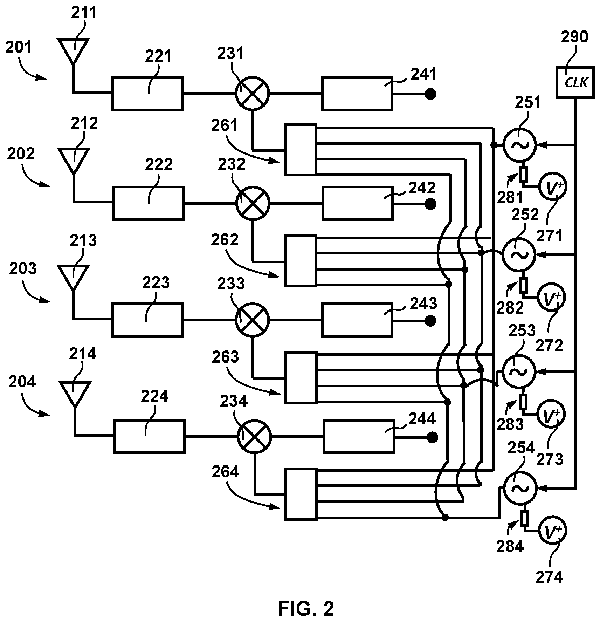

Figure 2 shows a block diagram of an RF front end in accordance with another embodiment of the present invention. The RF front end comprises a plurality of RF chains including four RF chains 201-204 (M=4), a plurality of local oscillators including four local oscillators 251-254 (N=4) that may be respectively powered by voltage sources 271-274, a clock 290 providing a reference signal to local oscillators 251-254, and reconfiguration means 261-264, 281-284.

The RF chains 201-204 comprise, respectively, antennas 211-214, first signal conditioning stages 221-224, frequency mixers 231-234, and second signal conditioning stages 241-244. The first and second conditioning stages 221-224, 241-244 may be similar to first and second conditioning stages 121-123, 141-143, respectively, as described with reference to Figures 1A-1C.

The reconfiguration means 261-264, 281-284 are configured to connect the frequency mixer of each RF chain to any local oscillator of the RF front end by adjusting connections 261-264. Like in the embodiments referred to in relation to figures 1A-1C, the connections 261-264 may be adjusted by 0Ω (zero ohm) resistors, by RF relays, by RF switches preferably featuring high isolation and low insertion losses, or by any other means that a skilled person may contemplate. The reconfiguration means are further configured to enable or disable the power supply of a local oscillator by adjusting connections 281-284, thus when a local oscillator is not connected to any frequency mixer, the local oscillator may be disconnected from the corresponding voltage source 271-274, whereas when a local oscillator is connected to at least one frequency mixer, the local oscillator is connected to the corresponding voltage source 271-274.

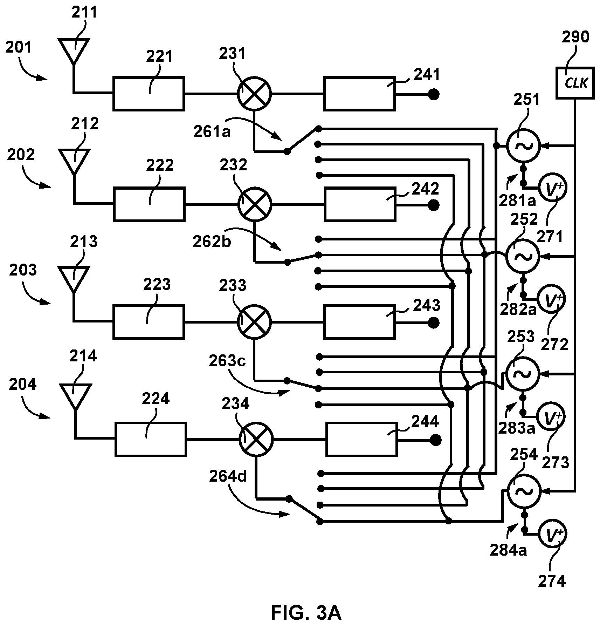

The RF front end shown in Figure 3A is the front end of Figure 2 when the reconfiguration means establish connections 261a, 262b, 263c, 264d. As a result, the frequency mixer 231 is connected to local oscillator 251, the frequency mixer 232 is connected to local oscillator 252, the frequency mixer 233 is connected to local oscillator 253, and the frequency mixer 234 is connected to local oscillator 254. Further, owing to connections 281a-284a of the reconfiguration means, the local oscillators are powered by respective voltage sources 271-274.

With the configuration shown in Figure 3A in which each frequency mixer uses a different local oscillator, a GNSS processor connectable to the RF front end may use the signals at the outputs of the RF chains 201-204 for satellite navigation, for example.

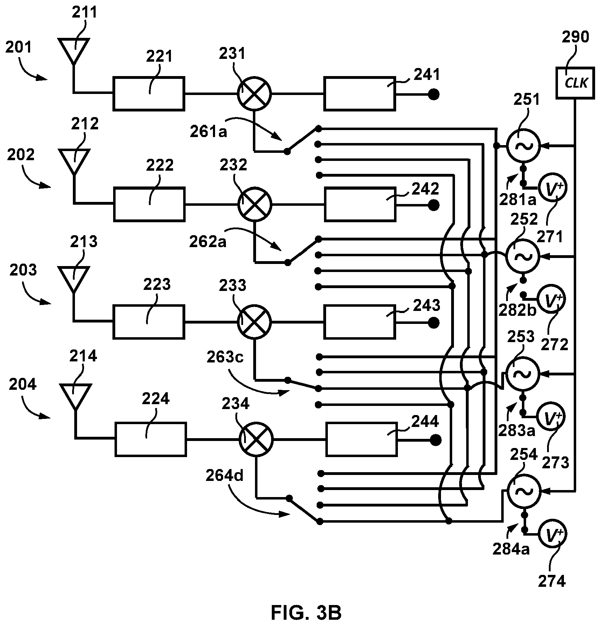

In Figure 3B, the reconfiguration means change an established connection from 262b to 262a, resulting in the frequency mixer 232 to be connected to local oscillator 251. As it can be observed, local oscillator 251 is now shared by RF chains 201, 202 and local oscillator 252 becomes unused. The reconfiguration means further disconnect the local oscillator 252 from the voltage source 272 by means of connection 282b, for example by switching off a voltage regulator. So only the three local oscillators 251, 253, 254 connected to frequency mixers 231-234 have power supplied to them by means of voltage sources 271, 273, 274, respectively.

As the frequency mixers 231, 232 share a same local oscillator 251, the corresponding RF chains 201, 202 may be advantageously used by a GNSS processor for reflectometry, for example, whereas the frequency mixers 233, 234 using different local oscillators may be used for satellite navigation.

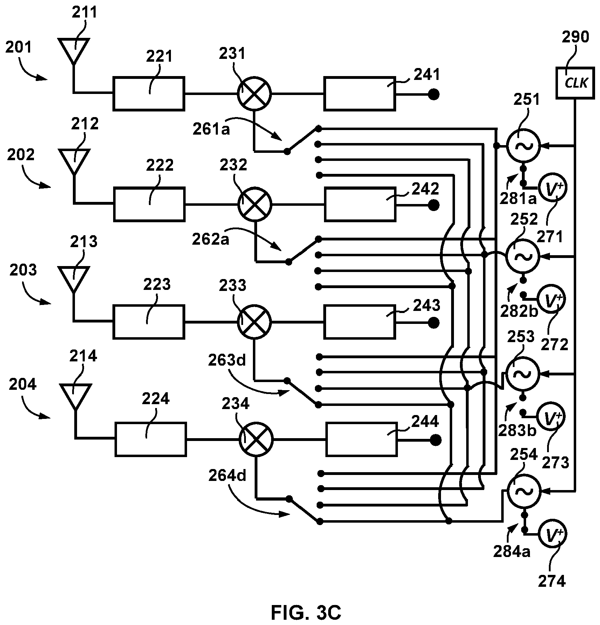

In addition to the local oscillator 251 being shared by frequency mixers 231, 232, in Figure 3C the frequency mixers 233, 234 also share a same local oscillator 254; to this end, the reconfiguration means establish connection 263d. Thus, a first pair of frequency mixers 231, 232 uses a first local oscillator 251, and a second pair of frequency mixers 233, 234 uses a second local oscillator 254. Since the local oscillator 253 is not used in the configuration of Figure 3C, the reconfiguration means may also disconnect it from the voltage source 273 by changing the connection to 283b.

In this case, a GNSS processor may, for example, use the first pair of RF chains 201, 202 for reflectometry, and the second pair of RF chains 203, 204 for reflectometry as well.

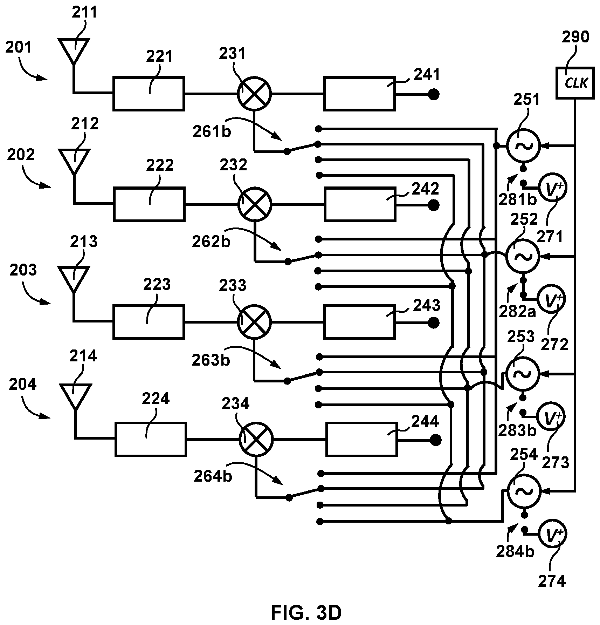

Regarding Figure 3D, all the local oscillators are disconnected from their respective voltage sources -connections 281b, 283b, 284b of the reconfiguration means-, except for the local oscillator 252 which remains connected to the voltage source 272 -connection 282a of the reconfiguration means-. All the frequency mixers 231-234 share the local oscillator 252 by means of connections 261b-264b of the reconfiguration means. In some embodiments, a GNSS processor may be connected to an RF front end with such setup and use the signals at the outputs of the RF chains for GNSS interference detection and location.

Since the reconfiguration means establish the connections of the frequency mixers to the local oscillators, the RF front end of Figure 2 may support several modes of operation such as the examples depicted in Figures 3A, 3B, 3C and 3D. Moreover, the reconfiguration means may adjust the connections 261-264, 281-284 and arrive to any of the configurations of Figures 3A-3D starting from any other of the configurations of Figures 3A-3D.

It will be readily apparent to the person skilled in the art that other possible configurations are possible in the RF front end of Figure 2, that is to say, in general, any configuration can be reached starting from any other configuration, by adjusting connections 261-264, or that another RF front end including different combinations of RF chains and local oscillators may also feature other configurations owing to the capabilities of the reconfiguration means. In this sense, the embodiments shown in Figures 1A-1C, 2, 3A-3D may be combined in several ways; to name a few non-limiting examples, the embodiments corresponding to Figures 2, 3A-3D may include a single voltage source powering all local oscillators (like in Figures 1A-1C) instead of separate voltage sources powering one local oscillator, and the local oscillators may be connected to amplifiers prior to the frequency mixers (like in Figures 1B-1C).

The local oscillators 151, 152, 251-254 are not limited to any particular type of oscillators, and may be implemented in different forms known in the art such as, for example, voltage-controlled oscillators (VCO), variable frequency oscillators (VFO), numerically controlled oscillators (NCO), and frequency synthesizers.

It is to be noted that the reconfiguration means of any of Figures 1A-1C, 2, 3A-3D are schematic representations and should not be taken as limitative. It is clear to the person skilled in the art that different implementations of the reconfigurations means, other than 0Ω (zero ohm) resistors and/or voltage regulators, are possible. Some non-limiting implementations are microcoaxial cables (e.g. a plurality of receptacles for microcoaxial cables may be electrically connected to soldering pads or traces of a printed circuit board, so that connecting a cable to different receptacles results in different established connections) and jumpers. Some other non-limiting implementations that enable a more dynamical or automated control of the reconfiguration means are RF relays and RF switches preferably featuring high isolation and low insertion losses.

In this text, the term "comprises" and its derivations (such as "comprising", etc.) should not be understood in an excluding sense, that is, these terms should not be interpreted as excluding the possibility that what is described and defined may include further elements, steps, etc.

## Claims

1. An RF front end for global navigation satellite systems comprising:
a plurality M of RF chains (201-204) with M being a natural number greater than one, each RF chain (201-204) at least comprising:
an antenna (211-214), a low-noise amplifier, and a frequency mixer (231-234); and
a plurality N of local oscillators (251-254) with N being a natural number greater than one;
**characterized in that**
the RF front end further comprises reconfiguration means (261-264,281-284) configured to connect each of the M frequency mixers (231-234) to any of the N local oscillators (251-254), and to change at least one established connection between a frequency mixer (231-234) and a local oscillator (251-254) into a connection between the frequency mixer (231-234) and a different local oscillator (251-254).

2. The RF front end of claim 1, wherein N is not greater than M.

3. The RF front end of any of the preceding claims, wherein the reconfiguration means (261-264,281-284) are further configured to either connect any of the N local oscillators (251-254) to a voltage source (170,271-274), or disconnect any of the N local oscillators (251-254) from a voltage source (170,271-274).

4. The RF front end of any of the preceding claims, wherein M is 4.

5. The RF front end of any of the preceding claims, wherein the reconfiguration means (261-264,281-284) comprise a plurality of zero ohm resistors, and a plurality of voltage regulators.

6. The RF front end of any of claims 1-4, wherein the reconfiguration means (261-264,281-284) comprise one of: a plurality of RF relays, and a plurality of RF switches.

7. The RF front end of any of the preceding claims, wherein the reconfiguration means (261-264,281-284) are further configured to, being the frequency mixer (231-234) of a first RF chain (201-204) connected to a first local oscillator (251-254), change an established connection between the frequency mixer (231-234) of a second RF chain (201-204) and a second local oscillator (251-254) into a connection between the frequency mixer (231-234) of the second RF chain (201-204) and the first local oscillator (251-254).

8. The RF front end of claim 7, wherein the reconfiguration means are further configured to connect the frequency mixers (231-234) of third and fourth RF chains (201-204) to a local oscillator (251-254) different from the first local oscillator (251-254) so as to share said local oscillator (251-254) different from the first local oscillator (251-254).

9. The RF front end of any of the preceding claims, wherein the reconfiguration means are further configured to, being the frequency mixer (231-234) of a first RF chain (201-204) connected to a first local oscillator (251-254), change the established connection between the frequency mixer (231-234) of all other RF chains (201-204) and any local oscillator (251-254) different from the first local oscillator (251-254) into respective connections between the frequency mixer (231-234) of those other RF chains (201-204) and the first local oscillator (251-254).

10. The RF front end of any of the preceding claims, wherein the reconfiguration means are further configured to, being the frequency mixer (231-234) of a first RF chain (201-204) and the frequency mixer (231-234) of a second RF chain (201-204) connected to a same local oscillator (251-254), change the connection between the frequency mixer (231-234) of one of those two RF chains (201-204) and said same local oscillator (251-254) into a connection between the frequency mixer (231-234) of that RF chain (201-204) and a local oscillator (251-254) different from said same local oscillator (251-254).

11. A method for reconfiguring an RF front end for global navigation satellite systems, wherein the RF front end comprises a plurality N of local oscillators (251-254) and a plurality M of RF chains (201-204) each having an antenna (211-214), a low-noise amplifier and a frequency mixer (231-234), wherein each of the M frequency mixers (231-234) is connected to any of the N local oscillators (251-254), with M being a natural number greater than one and N being a natural number greater than one, the method comprising:
- changing an established connection between the frequency mixer (231-234) of a first RF chain (201-204) and a first local oscillator (251-254) into a connection between the frequency mixer (231-234) of the first RF chain (201-204) and a second local oscillator (251-254).

12. The method of claim 11, further comprising:
- changing an established connection between the frequency mixer (231-234) of a second RF chain (201-204) and a local oscillator (251-254) different from the second local oscillator (251-254) into a connection between the frequency mixer (231-234) of the second RF chain (201-204) and the second local oscillator (251-254).

13. The method of claim 11, further comprising:
- having the frequency mixer (231-234) of two respective RF chains (201-204) connected to a same local oscillator (251-254), changing one of those established connections into a connection between the frequency mixer (231-234) of one of those RF chains (201-204) into a connection between that frequency mixer (231-234) and another local oscillator (251-254) different from said same local oscillator (251-254).

14. The method of claim 12, wherein the frequency mixer (231-234) of a third RF chain (201-204) is connected to a third local oscillator (251-254); and the method further comprises:
- changing an established connection between the frequency mixer (231-234) of a fourth RF chain (201-204) and a local oscillator (251-254) different from the third local oscillator (251-254) into a connection between the frequency mixer (231-234) of the fourth RF chain (201-204) and the third local oscillator (251-254).

15. The method of any of claims 11-12, further comprising:
- changing established connections between the frequency mixer (231-234) of all RF chains (201-204) and a local oscillator (251-254) different from the second local oscillator (251-254) into respective connections between the frequency mixer (231-234) of those RF chains (201-204) and the second local oscillator (251-254).

## Patentansprüche

1. HF-Frontend für globale Navigationssatellitensysteme, umfassend:
eine Vielzahl M an HF-Ketten (201-204), wobei M eine natürliche Zahl größer Eins ist, wobei jede HF-Kette (201-204) mindestens umfasst:
eine Antenne (211-214), einen rauscharmen Verstärker und einen Frequenzmischer (231-234); und
eine Vielzahl N an Lokaloszillatoren (251-254), wobei N eine natürliche Zahl größer Eins ist;
**dadurch gekennzeichnet, dass**
das HF-Frontend außerdem Rekonfigurierungsmittel (261-264, 281-284) umfasst, die so konfiguriert sind, dass sie jeden der M Frequenzmischer (231-234) mit einem der N Lokaloszillatoren (251-254) verbinden, und wenigstens eine bestehende Verbindung zwischen einem Frequenzmischer (231-234) und einem Lokaloszillator (251-254) in eine Verbindung zwischen dem Frequenzmischer (231-234) und einem anderen Lokaloszillator (251-254) umwandeln.

2. HF-Frontend nach Anspruch 1, wobei N nicht größer als M ist.

3. HF-Frontend nach einem der vorhergehenden Ansprüche, wobei die Rekonfigurierungsmittel (261-264, 281-284) außerdem so konfiguriert sind, dass sie entweder einen der N Lokaloszillatoren (251-254) an eine Spannungsquelle (170, 271-274) anschließen, oder einen der N Lokaloszillatoren (251-254) von einer Spannungsquelle (170, 271-274) trennen.

4. HF-Frontend nach einem der vorhergehenden Ansprüche, wobei M gleich 4 ist.

5. HF-Frontend nach einem der vorhergehenden Ansprüche, wobei die Rekonfigurierungsmittel (261-264, 281-284) eine Vielzahl von Null-Ohm-Widerständen und eine Vielzahl von Spannungsreglern umfassen.

6. HF-Frontend nach einem der Ansprüche 1 bis 4, wobei die Rekonfigurierungsmittel (261-264, 281-284) eines von: einer Vielzahl von HF-Relais und einer Vielzahl von HF-Schaltern umfassen.

7. HF-Frontend nach einem der vorhergehenden Ansprüche, wobei die Rekonfigurierungsmittel (261-264, 281-284) außerdem so konfiguriert sind, dass sie, während sie den Frequenzmischer (231-234) einer ersten HF-Kette (201-204), die mit einem ersten Lokaloszillator (251-254) verbunden ist, darstellen, eine bestehende Verbindung zwischen dem Frequenzmischer (231-234) einer zweiten HF-Kette (201-204) und einem zweiten Lokaloszillator (251-254) in eine Verbindung zwischen dem Frequenzmischer (231-234) der zweiten HF-Kette (201-204) und dem ersten Lokaloszillators (251-254) umwandeln.

8. HF-Frontend nach Anspruch 7, wobei die Rekonfigurierungsmittel außerdem so konfiguriert sind, dass sie die Frequenzmischer (231-234) der dritten und vierten HF-Ketten (201-204) mit einem Lokaloszillator (251-254) verbinden, der sich von dem ersten Lokaloszillator (251-254) unterscheidet, um diesen von dem ersten Lokaloszillator (251-254) verschiedenen Lokaloszillator (251-254) gemeinsam zu nutzen.

9. HF-Frontend nach einem der vorhergehenden Ansprüche, wobei die Rekonfigurierungsmittel außerdem so konfiguriert sind, dass sie, während sie den Frequenzmischer (231-234) einer ersten HF-Kette (201-204), die mit einem ersten Lokaloszillator (251-254) verbunden ist, darstellen, die bestehende Verbindung zwischen dem Frequenzmischer (231-234) aller anderen HF-Ketten (201-204) und einem Lokaloszillator (251-254), der sich vom ersten Lokaloszillator (251-254) unterscheidet, in entsprechende Verbindungen zwischen dem Frequenzmischer (231-234) dieser anderen HF-Ketten (201-204) und dem ersten Lokaloszillator (251-254) umwandeln.

10. HF-Frontend nach einem der vorhergehenden Ansprüche, wobei die Rekonfigurierungsmittel außerdem so konfiguriert sind, dass sie, während sie den Frequenzmischer (231-234) einer ersten HF-Kette (201-204) und den Frequenzmischer (231-234) einer zweiten HF-Kette (201-204), die mit einem gleichen Lokaloszillator (251-254) verbunden sind, darstellen, die Verbindung zwischen dem Frequenzmischer (231-234) einer dieser beiden HF-Ketten (201-204) und dem gleichen Lokaloszillator (251-254) in eine Verbindung zwischen dem Frequenzmischer (231-234) dieser HF-Kette (201-204) und einem Lokaloszillator (251-254), der sich von dem gleichen Lokaloszillator (251-254) unterscheidet, umwandeln.

11. Verfahren zum Rekonfigurieren eines HF-Frontends für globale Navigationssatellitensysteme, wobei das HF-Frontend eine Vielzahl N an Lokaloszillatoren (251-254) und eine Vielzahl von M an HF-Ketten (201-204), die jeweils eine Antenne (211-214), einen rauscharmen Verstärker und einen Frequenzmischer (231-234) aufweisen, umfasst wobei jeder der M Frequenzmischer (231-234) mit einem der N Lokaloszillatoren (251-254) verbunden ist, wobei M eine natürliche Zahl größer Eins und N eine natürliche Zahl größer Eins ist, wobei das Verfahren umfasst:
- Umwandeln einer bestehenden Verbindung zwischen dem Frequenzmischer (231-234) einer ersten HF-Kette (201-204) und einem ersten Lokaloszillator (251-254) in eine Verbindung zwischen dem Frequenzmischer (231-234) der ersten HF-Kette (201-204) und einem zweiten Lokaloszillator (251-254).

12. Verfahren nach Anspruch 11, außerdem umfassend:
- Umwandeln einer bestehenden Verbindung zwischen dem Frequenzmischer (231-234) einer zweiten HF-Kette (201-204) und einem Lokaloszillator (251-254), der sich von dem zweiten Lokaloszillator (251-254) unterscheidet, in eine Verbindung zwischen dem Frequenzmischer (231-234) der zweiten HF-Kette (201-204) und dem zweiten Lokaloszillator (251-254).

13. Verfahren nach Anspruch 11, außerdem umfassend:
- während des Verbunden-Seins des Frequenzmischers (231-234) zweier entsprechender HF-Ketten (201-204) mit einem gleichen Lokaloszillator (251-254) das Umwandeln einer dieser bestehenden Verbindungen des Frequenzmischers (231-234) einer dieser HF-Ketten (201-204) in eine Verbindung zwischen diesem Frequenzmischer (231-234) und einem anderen Lokaloszillator (251-254), der sich von dem gleichen Lokaloszillator (251- 254) unterscheidet.

14. Verfahren nach Anspruch 12, wobei der Frequenzmischer (231-234) einer dritten HF-Kette (201-204) mit einem dritten Lokaloszillator (251-254) verbunden ist; und das Verfahren außerdem umfasst:
- Umwandeln einer bestehenden Verbindung zwischen dem Frequenzmischer (231-234) einer vierten HF-Kette (201-204) und einem Lokaloszillator (251-254), der sich von dem dritten Lokaloszillator (251-254) unterscheidet, in eine Verbindung zwischen dem Frequenzmischer (231-234) der vierten HF-Kette (201-204) und dem dritten Lokaloszillator (251-254).

15. Verfahren nach einem der Ansprüche 11-12, außerdem umfassend:
- Umwandeln von bestehenden Verbindungen zwischen dem Frequenzmischer (231-234) aller HF-Ketten (201-204) und einem Lokaloszillator (251-254), der sich von dem zweiten Lokaloszillator (251-254) unterscheidet, in entsprechende Verbindungen zwischen dem Frequenzmischer (231-234) dieser HF-Ketten (201-204) und dem zweiten Lokaloszillator (251-254).

## Revendications

1. Étage frontal RF pour des systèmes de satellites de géolocalisation et de navigation comprenant :
une pluralité M de chaînes RF (201-204) avec M étant un entier naturel supérieur à un, chaque chaîne RF (201-204) comprenant au moins :
une antenne (211-214), un amplificateur à faible bruit et un mélangeur de fréquences (231-234) ; et
une pluralité N d'oscillateurs locaux (251-254) avec N étant un nombre naturel supérieur à un ;
**caractérisé en ce que**
l'étage frontal RF comprend en outre des moyens de reconfiguration (261-264, 281-284) configurés pour connecter chacun des M mélangeurs de fréquences (231-234) à l'un quelconque des N oscillateurs locaux (251-254), et pour changer au moins une connexion établie entre un mélangeur de fréquences (231-234) et un oscillateur local (251-254) en une connexion entre le mélangeur de fréquences (231-234) et un oscillateur local différent (251-254).

2. Étage frontal RF selon la revendication 1, dans lequel N n'est pas supérieur à M.

3. Étage frontal RF selon l'une quelconque des revendications précédentes, dans lequel les moyens de reconfiguration (261-264, 281-284) sont en outre configurés pour soit connecter l'un quelconque des N oscillateurs locaux (251-254) à une source de tension (170, 271-274), soit déconnecter l'un quelconque des N oscillateurs locaux (251-254) d'une source de tension (170, 271-274).

4. Étage frontal RF selon l'une quelconque des revendications précédentes, dans lequel M est 4.

5. Étage frontal RF selon l'une quelconque des revendications précédentes, dans lequel les moyens de reconfiguration (261-264,281-284) comprennent une pluralité de résistances de zéro ohm et une pluralité de régulateurs de tension.

6. Étage frontal RF selon l'une quelconque des revendications 1 à 4, dans lequel les moyens de reconfiguration (261-264, 281-284) comprennent un de : une pluralité de relais RF et une pluralité de commutateurs RF.

7. Étage frontal RF selon l'une quelconque des revendications précédentes, dans lequel les moyens de reconfiguration (261-264, 281-284) sont en outre configurés pour, le mélangeur de fréquences (231-234) d'une première chaîne RF (201-204) étant connecté à un premier oscillateur local (251-254), changer une connexion établie entre le mélangeur de fréquences (231-234) d'une deuxième chaîne RF (201-204) et un deuxième oscillateur local (251-254) en une connexion entre le mélangeur de fréquences (231-234) de la deuxième chaîne RF (201-204) et le premier oscillateur local (251-254).

8. Étage frontal RF selon la revendication 7, dans lequel les moyens de reconfiguration sont en outre configurés pour connecter les mélangeurs de fréquences (231-234) de troisième et quatrième chaînes RF (201-204) à un oscillateur local (251-254) différent du premier oscillateur local (251-254) de sorte à partager ledit oscillateur local (251-254) différent du premier oscillateur local (251-254).

9. Étage frontal RF selon l'une quelconque des revendications précédentes, dans lequel les moyens de reconfiguration sont en outre configurés pour, le mélangeur de fréquences (231-234) d'une première chaîne RF (201-204) étant connecté à un premier oscillateur local (251-254), changer la connexion établie entre le mélangeur de fréquences (231-234) de toutes les autres chaînes RF (201-204) et un oscillateur local (251-254) quelconque différent du premier oscillateur local (251-254) en des connexions respectives entre le mélangeur de fréquences (231-234) de ces autres chaînes RF (201-204) et le premier oscillateur local (251-254).

10. Étage frontal RF selon l'une quelconque des revendications précédentes, dans lequel les moyens de reconfiguration sont en outre configurés pour, le mélangeur de fréquences (231-234) d'une première chaîne RF (201-204) et le mélangeur de fréquences (231-234) d'une deuxième chaîne RF (201-204) étant connectés à un même oscillateur local (251-254), changer la connexion entre le mélangeur de fréquences (231-234) d'une de ces deux chaînes RF (201-204) et ledit même oscillateur local (251-254) en une connexion entre le mélangeur de fréquences (231-234) de cette chaîne RF (201-204) et un oscillateur local (251-254) différent dudit même oscillateur local (251-254).

11. Procédé de reconfiguration d'un étage frontal RF pour des systèmes de satellites de géolocalisation et de navigation, dans lequel l'étage frontal RF comprend une pluralité N d'oscillateurs locaux (251-254) et une pluralité M de chaînes RF (201-204) ayant chacune une antenne (211-214), un amplificateur à faible bruit et un mélangeur de fréquences (231-234), dans lequel chacun des M mélangeurs de fréquences (231-234) est connecté à l'un quelconque des N oscillateurs locaux (251-254), avec M étant un entier naturel supérieur à un et N étant un entier naturel supérieur à un, le procédé comprenant :
- le changement d'une connexion établie entre le mélangeur de fréquences (231-234) d'une première chaîne RF (201-204) et un premier oscillateur local (251-254) en une connexion entre le mélangeur de fréquences (231-234) de la première chaîne RF (201-204) et un deuxième oscillateur local (251-254).

12. Procédé selon la revendication 11, comprenant en outre :
- le changement d'une connexion établie entre le mélangeur de fréquences (231-234) d'une deuxième chaîne RF (201-204) et un oscillateur local (251-254) différent du deuxième oscillateur local (251-254) en une connexion entre le mélangeur de fréquences (231-234) de la deuxième chaîne RF (201-204) et le deuxième oscillateur local (251-254).

13. Procédé selon la revendication 11, comprenant en outre :
- le mélangeur de fréquences (231-234) de deux chaînes RF respectives (201-204) étant connecté à un même oscillateur local (251-254), le changement d'une de ces connexions établies en une connexion entre le mélangeur de fréquences (231-234) d'une de ces chaînes RF (201-204) en une connexion entre ce mélangeur de fréquences (231-234) et un autre oscillateur local (251-254) différent dudit même oscillateur local (251-254).

14. Procédé selon la revendication 12, dans lequel le mélangeur de fréquences (231-234) d'une troisième chaîne RF (201-204) est connecté à un troisième oscillateur local (251-254) ; et le procédé comprend :
- le changement d'une connexion établie entre le mélangeur de fréquences (231-234) d'une quatrième chaîne RF (201-204) et un oscillateur local (251-254) différent du troisième oscillateur local (251-254) en une connexion entre le mélangeur de fréquences (231-234) de la quatrième chaîne RF (201-204) et le troisième oscillateur local (251-254).

15. Procédé selon l'une quelconque des revendications 11 à 12, comprenant en outre :
- le changement de connexions établies entre le mélangeur de fréquences (231-234) de toutes les chaînes RF (201-204) et un oscillateur local (251-254) différent du deuxième oscillateur local (251-254) en des connexions respectives entre le mélangeur de fréquences (231-234) de ces chaînes RF (201-204) et le deuxième oscillateur local (251-254).
